## Europäisches Patentamt
## European Patent Office
## Office européen des brevets

(19)

(11) Veröffentlichungsnummer: **0 354 901**
**B1**

(12) **EUROPÄISCHE PATENTSCHRIFT**

(45) Veröffentlichungstag der Patentschrift: 07.11.90

(51) Int. Cl.⁵: **B 60 K 41/06,** F 16 H 59/02

(21) Anmeldenummer: 88901597.0

(22) Anmeldetag: 16.02.88

(86) Internationale Anmeldenummer:
PCT/EP88/00112

(87) Internationale Veröffentlichungsnummer:
WO 88/06540 07.09.88 Gazette 88/20

(54) STEUEREINRICHTUNG FÜR EIN AUTOMATISCH GESCHALTETES GETRIEBE.

(30) Priorität: 26.02.87 DE 3706179
15.04.87 DE 3712808

(43) Veröffentlichungstag der Anmeldung:
21.02.90 Patentblatt 90/08

(45) Bekanntmachung des Hinweises auf die
Patenterteilung:
07.11.90 Patentblatt 90/45

(84) Benannte Vertragsstaaten:
AT DE FR GB IT NL SE

(56) Entgegenhaltungen:
WO-A-87/00806
DE-A-3 139 838
US-A-3 732 755

(73) Patentinhaber: ZAHNRADFABRIK
FRIEDRICHSHAFEN AKTIENGESELLSCHAFT
Löwentaler Strasse 100 Postfach 2520
D-7990 Friedrichshafen 1 (DE)

(72) Erfinder: RAUE, Reimund
Weiherstra e 31/2
D-7990 Friedrichshafen 5 (DE)

(74) Vertreter: Raue, Reimund
Zahnradfabrik Friedrichshafen AG Löwentaler
Strasse 100 Postfach 2520
D-7990 Friedrichshafen 1 (DE)

EP 0 354 901 B1

Courier Press, Leamington Spa, England.

**Beschreibung**

Die Erfindung betrifft eine Steuereinrichtung für ein automatisch geschaltetes Getriebe eines Kraftfahrzeuges nach dem Oberbegriff von Anspruch 1.

Eine solche Steuereinrichtung ist aus ATZ 85 (1983) 6 aus den Veröffentlichungen "Entwicklung des 4-Gang-Automatgetriebes 4 HP 22 der ZF (Dach) S. 393 und Einsatz von 4-Gang-Automatgetrieben mit elektronisch-hydraulischer Steuerung (Lorenz/Larisch) S. 401" bekannt. In diesen beschriebenen elektronisch-hydraulischen Steuereinrichtungen ist es möglich, über eine Vollgasbetätigung (Kick-down) Einfluß auf die Schaltung des Getriebes zu nehmen.

Der Fahrer kann auf diese Weise eine Rückschaltung bewirken, um z. B. bei einem Überholvorgang auch eine dazu nötige Beschleunigung zu erzielen.

Weiter ist aus der EP-A-01 44 608 bekannt, die Querbeschleunigung zur Schaltpunktbeeinflussung mit zu berücksichtigen.

Und schließlich ist aus der DE-A-36 26 100 bekannt, in einer Steuereinrichtung für ein automatisches Nutzkraftfahrzeuggetriebe zur besseren Anpassung der Automatik den Lenkausschlag an der Steuersäule für eine Signalermittlung zu verwenden. Dabei soll in Abhängigkeit vom Lenkausschlag und dessen Größe eine Rückschaltung um einen oder mehrere Gänge erfolgen.

Alle diese Lösungen verbessern zwar die Anpassung der Schaltung eines Automatgetriebes während einer Kurvenfahrt bzw. eines Überholvorganges. Die Schaltung kommt aber sehr spät, und die Einrichtungen zur Ermittlung der Informationen für die Beeinflussung sind darüber hinaus noch relativ teuer.

Es ist deshalb Aufgabe der Erfindung, eine Steuereinrichtung nach dem Oberbegriff von Anspruch 1 weiterzuentwickeln. Bei Kurvenfahrt und Überholvorgängen soll mit möglichst einfachen Mitteln die automatische Schaltung noch besser an die Verkehrssituation angepaßt werden können.

Diese Aufgabe wird mit den kennzeichnenden Merkmalen von Anspruch 1 erfüllt.

Bekannte Automatgetriebe schalten bei mittleren Fahrzeuggeschwindigkeiten und geringer Leistungsanforderung in den höchsten Gang. Unter diesen Bedingungen ist das zur Verfügung stehende Beschleunigungspotential gering. Will nun der Fahrer ein vor ihm fahrendes Fahrzeug überholen, verharrt er in diesem Zustand, bis die Verkehrssituation ihm das Überholen gestattet. Erst dann entstehen die aus der Leistungsanforderung, dem Lenkeinschlag oder der Querbeschleunigung abgeleiteten Steuersignale für die Getriebesteuerung. Nach ihrer Verarbeitung schaltet das Getriebe und der Antriebsmotor beschleunigt auf die höhere Drehzahl. Inzwischen ist wertvolle Zeit für den Überholvorgang verstrichen. Betätigt der Fahrer dabei Kick-down, verfügt er zwar über die maximal zulässige Leistung, jedoch ist ein solcher Start nur in Notfällen erforderlich. Übliche Überholvorgänge sollten keine Notfälle darstellen. Wird die Gaspedalstellung zurückgenommen, schaltet das Getriebe unerwünscht schon beim Überholvorgang hoch. Dasselbe findet statt, wenn andere Steuersignale nicht während des gesamten Überholvorganges gehalten werden können.

Demgegenüber wird bei der erfindungsgemäßen Steuereinrichtung ein Steuersignal ausgewertet, das einer aus der jeweiligen Verkehrssituation abgeleiteten Absicht des Fahrers entspricht. Bevor der Fahrer zum Überholen ansetzt, ist er verpflichtet, rechtzeitig seine Richtungsänderung dem hinter ihm fahrenden Verkehr durch Betätigen des Blinkgebers anzuzeigen. Die erfindungsgemäße Steuereinrichtung wertet diese Betätigung zu Steuerzwecken aus, indem der Fahrzeugantrieb in einen Zustand höherer Leistungs- bzw. Beschleunigungsreserven versetzt wird, bevor die eigentliche Leistungsanforderung über das Gaspedal erfolgt. Der Fahrer kann nun die Leistungsreserve entsprechend der Verkehrssituation zügig beschleunigend ausnützen, ohne beim Überholvorgang unvermutet in einen ungünstigen Leistungsbereich zurückzufallen oder dem Motor zu schaden. Außerdem ergibt sich ein harmonischer Übergang zur Kick-down-Position. Ferner ist es möglich, beim Abbiegen an Kreuzungen aus einer flüssigen Fahrt heraus mit der Betätigung des Blinkgebers eine Rückschaltung zu bewirken, ohne daß der Wählhebel zur Erzielung einer Rückschaltung betätigt werden muß. Geht der Fahrer z. B. vor dem Überholen, vor einer Kurvenfahrt oder beim Heranfahren an eine Kreuzung, an der abgebogen werden soll, vom Gaspedal, so leitet der Getriebeautomat eine Hochschaltung ein. Diese kann durch eine rechtzeitige Betätigung des Blinkgebers verhindert werden, so daß auch noch eine zu hohe Schalthäufigkeit verhindert wird. Gibt der Fahrer zum Überholen oder in der Kurve wieder Gas, so muß die Automatik erst zurückschalten, bevor der Fahrer die angeforderte Leistung bekommt. Durch die Verhinderung einer Hochschaltung und/oder die Erzielung einer Rückschaltung infolge der einfachen Einbeziehung des Blinkgebers in die automatische Steuerung kann Zeitverlust und eine Einbuße beim Fahrkomfort verhindert und vor allem eine höhere Sicherheit gewonnen werden.

Die auf die praktischen Anforderungen gut angepaßte Ausgestaltung der Erfindung nach den abhängigen Ansprüchen bietet zusätzliche Vorteile. So kann bei einer Blinkgeber-Einrichtung mit automatischer Rückstellung die Beeinflussung der elektronischen Einheit über die Zeit der Blinkgeber-Betätigung hinaus verlängert werden. Die Umschaltung von einem leistungsorientierten Programm in ein ökonomisches Programm kann in Abhängigkeit von einer definierten Zeit ab der Rückstellung, aber auch in Abhängigkeit von der Leistungsanforderung, z. B. unterhalb einer definierten Gashebelstellung, erfolgen. Auf diese Weise ist es möglich, z. B. Überholvorgänge auf der Autobahn bis zum Wiedereinspuren optimal durchzuführen, ohne daß Eingriffe an dem Wählhebel und/oder Konsolenschalter nötig sind. Wird die Beeinflussung der Elektronik in Form einer Gang-Rückschaltung oder Programmumschaltung nicht gewünscht, z. B. bei Überholvorgängen im Zusammenhang mit einer ruhigen Verkehrslage, ist es möglich, durch Antippen oder einen ersten Schalter in Verbindung mit einem ersten Weg in die jeweilige Richtung nur den Blinkgeber zu betätigen, weil ja die Überlagerung der elektronischen Schaltpunktermittlung erst mit einem größeren Weg über einen zweiten Schalter bewirkt wird. Dies ist auch mit einem einfachen Blinkgeberschalter erzielbar, wenn in der elektronischen Steuereinheit ein Zeitglied angeordnet ist, die Einschaltzeit gemessen wird, und wenn erst nach Ablauf einer vorgegebenen Zeit die Überlagerung der Schaltpunktermittlung erfolgt. Für Bergfahrten ist es vorteilhaft, den Schalter für die Aktivierung der Schaltpunktbeeinflussung, aber besonders für die Umschaltung der Programme — Ökonomie, Leistung — zwar am Blinkgeberhebel oder in dessen Nähe anzuordnen, die Betätigung aber nicht zwangsläufig mit der Aktivierung des Blinkgebers zu vereinen.

Damit ist es möglich, die Programme nicht schlechthin für eine bestimmte Dauer der Fahrt auszuwählen — wie bisher mit dem Schalter an der Konsole —, sondern die in der Elektronik gespeicherten Schaltprogramme und damit die diesen Schaltprogrammen zugeordneten Schaltpunkte bei Hoch- und Rückschaltungen für eine flüssige, sichere, aber auch ökonomische Fahrweise fortwährend in die Nutzung eines Automatgetriebes mit einzubeziehen.

Weitere Einzelheiten der Erfindung werden anhand von Zeichnungen und einem Ausführungsbeispiel erläutert.

Es zeigen:

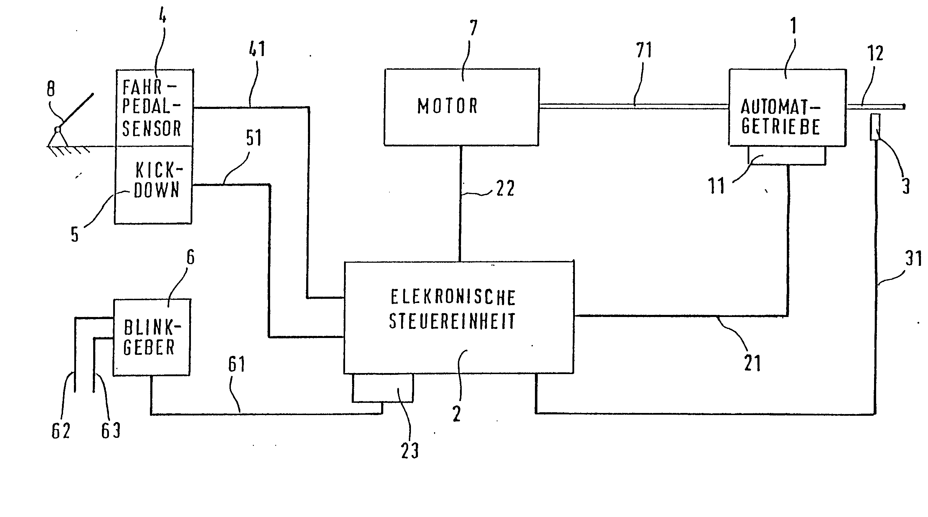

Fig. 1 ein Blockschaltbild einer Steuereinrichtung für ein Automatgetriebe;

Fig. 2 eine Blinkgeber-Einrichtung im Bereich des Lenkrades.

Das in der Fig. mit 1 bezeichnete Automatgetriebe kann sowohl ein hydrodynamisch-mechanisches Getriebe, z. B. mit Drehmomentwandler und mit einem Umlaufrädergetriebe, aber auch ein automatisiertes Vorgelegegetriebe sein, das als Kupplungs-Getriebeeinheit zusammengefaßt ist. Der elektronischen Steuereinheit 2 werden zumindest zur Ermittlung der Schaltpunkte für das Automatgetriebe 1 über einen Fahrzeug-Geschwindigkeitssensor 3, einen Fahrpedalsensor 4, einen Kickdown-Schalter 5 und den Blinkgeber 6 Informationen zugeführt. Der Blinkgeber 6 hat dafür noch eine Leitung 61, die diesen mit der elektronischen Steuereinheit 2 verbindet. Die Leitungen 62, 63 führen in bekannter Weise zu den Blinkleuchten für die Anzeige zur Änderung der Fahrtrichtung. Über die Leitung 21 werden die Gangschaltbefehle an die z. B. Magnet-Schaltventile 11 vom Automatgetriebe 1 geleitet. Die Gangschaltung kann in bekannter Weise elektrohydraulisch, aber auch rein elektrisch erfolgen. Die elektronische Steuereinrichtung 2 ist noch über die Leitung 22 mit dem Motor, z. B. für die Motorbeeinflussung während des Schaltvorganges verbunden. Zwischen Fahrpedalsensor 4 und dem Motor kann auch noch eine elektronische Einheit als sogenannte elektronische Gaseinrichtung angeordnet sein. Mit 12 ist die Getriebeabtriebswelle und mit 71 die Motorabtriebswelle bezeichnet. Der Fahrpedalsensor 4 und Kickdown-Schalter 5 sind in oder am Fahrpedal 8 angeordnet. Über ein Zeitglied 23 in der elektronischen Steuereinheit 2 ist es möglich, das Signal aus dem Blinkgeber 6 über die Leitung 61 nur dann zur Beeinflussung der Schaltpunktermittlung zu verwenden, wenn es eine definierte Zeit lang anliegt. Ein relativ kurzes Antippen des Blinkgebers 6 führt also in bekannter Weise nur zur Betätigung der nicht dargestellten Blinkleuchten.

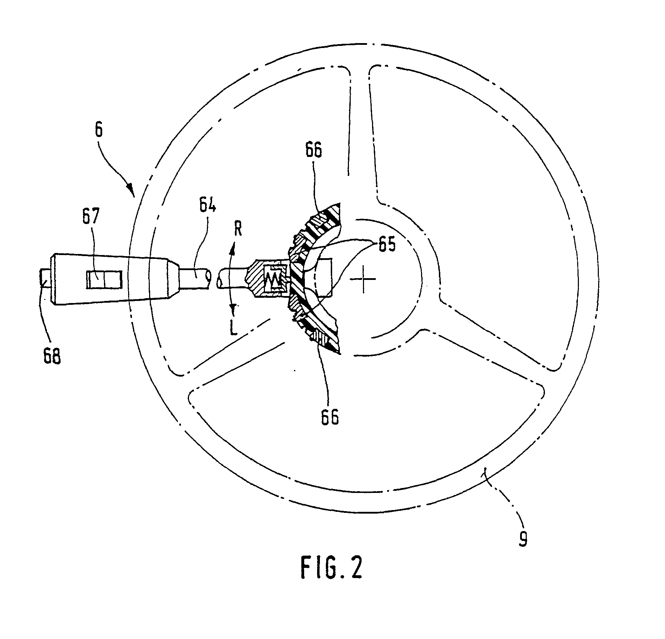

Nach Fig. 2 ist im Bereich eines Lenkrades 9 der Blinkgeber 6 angeordnet. Mit dem Blinkgeberhebel 64 werden in bekannter Weise die Blinkleuchten für die Fahrtrichtungsänderung aktiviert — Antippen oder Einschalten bzw. Einrasten der Schalter 65 —. In beiden Richtungen — Abbiegen Links L, Abbiegen Rechts R — kann jeweils noch je ein zweiter Schalter 66 angeordnet sein, der beim Schwenken des Blinkgeberhebels 64 mit betätigt werden kann. Alternativ können auch gesondert zu betätigende Schalter 67, 68, z. B. am Blinkgeberhebel 64, angeordnet sein.

Die Steuereinrichtung wirkt wie folgt: Die Schaltpunkte für die Gangschalteinrichtung — z. B. die Magnetventile 11 vom Automatgetriebe 1 — werden zumindest aus den Informationen von der Fahrzeuggeschwindigkeit — Sensor 3 —, die von der Drehzahl der Abtriebswelle 12 des Automatgetriebes 1 abgeleitet wird, und der Lastanforderung, z. B. abgeleitet aus dem Fahrpedalsensor 4, ermittelt und fahrzeuggeschwindigkeitsabhängig geschaltet. Zur Ermittlung der Schaltpunkte kann z. B. auch noch die Beschleunigung herangezogen werden, die z. B. aus einem Beschleunigungssensor aber auch aus einer Beschleunigungsberechnung in der elektronischen Steuereinrichtung 2 gewonnen wird. Mit der Betätigung des Fahrpedals 8 bis in die Endstellung ist es möglich, die allgemeine Schaltpunktermittlung zu überlagern, so daß über den Kick-down-Schalter 5 in der elektronischen Steuereinheit 2 ein Rückschaltbefehl um einen Gang ausgegeben wird, wenn dieser zulässig ist. Die Zulässigkeit wird über die Motordrehzahl ermittelt, die rechnerisch in der elektronischen Steuereinheit 2 ermittelt wird. Die Motordrehzahl kann aber auch über einen nicht dargestellten Sensor an der Motorabtriebswelle 71 abgegriffen werden. Die Parameter für die Ermittlung der Schaltpunkte und die Schaltbefehle selbst werden aus der jeweils gerade bestehenden Fahrsituation — Fahrgeschwindigkeit, Stellung des Fahrpedals — oder auch noch aus der ermittelten Beschleunigung abgeleitet. Mit dem Signal aus dem Blinkgeber 6 über die Leitung 61 zur elektronischen Steuereinheit 2 wird erstmalig ein Signal für die Schaltpunktermittlung verwendet, das einer bevorstehenden Fahrsituation entspricht. Es kann verwendet werden für die sofortige Rückschaltung um zumindest einen Gang, wenn diese Rückschaltung zulässig ist. Die bekannte Schaltpunktermittlung kann aber auch nur überlagert werden, so daß z. B. der drehzahlabhängige Rückschaltpunkt merkbar erhöht wird, damit eine leistungsoptimierte Fahrweise möglich ist. Beide Lösungsmöglichkeiten sind besonders sinnvoll bei elektronischen Steuerungen für Automatgetriebe mit wählbaren Programmen für z. B. eine ökonomische oder leistungsbetonte Fahrweise, ohne daß zur Erreichung der nötigen Fahrsicherheit eine Umschaltung von z. B. dem ökonomischen Programm auf das Leistungsprogramm nötig wird. Es ist auch denkbar, die Überlagerung der Schaltpunktermittlung, die über den Blinkgeber 6 erzielt wird, zeitlich zu begrenzen oder über die Zeitdauer des betätigten Blinkgebers hinaus zu verlängern, damit nicht über die gesamt Zeitdauer des eingestellten Blinkgebers 6 diese Überlagerung wirkt oder bei einer schnellen selbsttätigen Rückstellung des Blinkgebers die Zeit der Überlagerung verlängern zu können. Sie kann auch auf den Bereich der höheren Gänge eines Automatgetriebes beschränkt bleiben, weil beim Anfahren oder im Bereich der tieferen Gänge die Erhöhung der Fahrsicherheit durch eine frühzeitige Rückschaltung, z. B. bei einem Überholvorgang, nicht steht. Es können über das Signal aus dem Blinkgeber 6 an das elektronische Steuergerät 2 aber auch sonst übliche Hochschaltungen verhindert werden, z. B. bei einem bevorstehenden Überholvorgang, wenn ein Fahrzeug ohne oder mit einer geringen Betätigung des Fahrpedals 4 hinter einem relativ langsamen Fahrzeug herfährt und der Gegenverkehr abgewartet werden muß.

Hat der Blinkgeber 6 für beide Fahrt- bzw. Abbiegerichtungen zwei hintereinander liegende Schaltstellungen — angetippt ohne Haltestellung bzw. gerastet oder geschaltet —, so ist es möglich, die erste angetippte Stellung ohne, und die zweite gerastete Stellung mit Schaltpunktverlagerung oder Rückschaltung vorzusehen. Im Blinkgeber 6 sind deshalb für jede Schaltstellung zwei Schalter 65, 66 für jede Fahrtrichtung oder zumindest ein Kontakt und ein Schalter notwendig. Werden zwei Schalter benützt, so ist es möglich, den zweiten Schalter 66 für die Beeinflussung der elektronischen Steuerung 2 sowohl mit dem Blinkgeberhebel 64 gleichzeitig zu betätigen, oder auch eine zusätzliche Betätigung vorzusehen, z. B. über einen am Blinkgeberhebel 64 oder in dessen Nähe angebrachten Wipp- 67 oder Druckknopfschalter 68.

In einer weiteren Ausgestaltung der Erfindung ist es auch denkbar, die Umschaltung von einem Schaltprogramm zu einem anderen, z. B. einem verbrauchs- und komfortorientierten Programm in ein leistungsorientiertes Programm, mit dem Blinkgeberhebel 64, aber auch mit einem gesonderten Schalter 67, 68 am oder in der Nähe des Blinkgeberhebels 64 vorzunehmen. Die erfindungsgemäße Steuereinrichtung ist auch für Getriebe mit nur teilweise automatisierten Gängen, z. B. einem automatisierten Overdrive.

**Patentansprüche**

1. Steuereinrichtung für ein automatisch geschaltetes Getriebe (1) eines Kraftfahrzeuges mit einem Blinkgeber (6) und einer elektronischen Steuereinheit (2) zur Ermittlung der Schaltpunkte für die Gangumschaltung, zumindest aus der Fahrzeuggeschwindigkeit (Sensor 3) und der Lastinformation (Fahrpedalsensor 4), wobei der allgemeinen Schaltpunktermittlung in der Vorwärtsfahrt noch Befehle überlagert sind, die über für die Bedienung des Fahrzeuges notwendige Stelleinrichtungen (5) ausgelöst werden, dadurch gekennzeichnet, daß der Blinkgeber (6) für die Fahrtrichtungsanzeige über eine weitere Leitung (61) mit der elektronischen Einheit (2) verbunden ist und über ein Blinkgebersignal die allgemeine Schaltpunktermittlung überlagert wird.

2. Steuereinrichtung nach Anspruch 1, dadurch gekennzeichnet, daß über das Blinkgebersignal in Abhängigkeit von der Fahrzeuggeschwindigkeit (Sensor 3) und der Lastanforderung (Fahrpedalsensor 4) die Drehzahlen der den Gängen zugeordneten Rückschalt- und/oder Hochschaltpunkte erhöht werden.

3. Steuereinrichtung nach Anspruch 2 und einer Programm- Wähleinrichtung, dadurch gekennzeichnet, daß für die Dauer des Blinkgebersignals oder dieser Dauer plus einer definierten Zeit bzw. Leistungsanforderung ein Ökonomie- und Komfortprogramm von einem Leistungsprogramm überlagert wird.

4. Steuereinrichtung nach Anspruch 2, dadurch gekennzeichnet, daß diese erhöhten Drehzahlen unabhängig von dem jeweils gewählten Programm nahe der zulässigen Höchstdrehzahl für den Motor (7) liegen.

5. Steuereinrichtung nach Anspruch 1, dadurch gekennzeichnet, daß im Bereichen der höheren Gänge mit Betätigung des Blinkgebers (6) eine Rückschaltung um zumindest einen Gang erfolgt.

6. Steuereinrichtung nach Anspruch 1, dadurch gekennzeichnet, daß mit Betätigung des Blinkgebers (6) eine an und für sich vorgesehene Hochschaltung, die sich aus dem nicht oder nur minimal betätigten Fahrpedal (8) ableitet, verhindert wird.

7. Steuereinrichtung nach Anspruch 1, dadurch gekennzeichnet, daß in der elektronischen Steuereinheit (2) ein Zeitglied (23) angeordnet ist, und daß erst ab einer festgelegten Dauer des Blinkgebersignals über die Leitung (61) zur elektronischen Steuereinheit (2) eine Überlagerung der allgemeinen Schaltpunktermittlung erfolgt.

8. Steuereinrichtung nach Anspruch 1 wobei der Blinkgeber (6) in beiden Fahrt- bzw. Abbiegerichtungen zwei hintereinander liegende Schaltstellungen, z. B. Antippen, Rasten, hat, dadurch gekennzeichnet, daß nur bei gerastetem Blinkgeber die allgemeine Schaltpunktermittlung in der elektronischen Einheit (2) überlagert wird und beim Blinken durch Antippen keine Beeinflussung erfolgt.

9. Steuereinrichtung nach dem Oberbegriff von Anspruch 8, dadurch gekennzeichnet, daß der Blinkgeber (6) für die Aktivierung der Schaltpunktbeeinflussung noch einen gesonderten Schalter (65) aufweist, der mit der Betätigung des Blinkgeberhebels (64) mitbetätigt wird.

10. Steuereinrichtung nach dem Oberbegriff von Anspruch 8, dadurch gekennzeichnet, daß der Blinkgeber (6) für die Aktivierung der Schaltpunktbeeinflussung noch einen gesonderten Schalter (66, 67, 68) aufweist, der mit der Betätigung des Blinkgeberhebels (64) mitbetätigt werden kann.

11. Steuereinrichtung nach dem Oberbegriff von Anspruch 3, dadurch gekennzeichnet, daß am Blinkgeberhebel (64) für die Schaltung bzw. Umschaltung der Programme — Ökonomie- und Komfortprogramm, Leistungsprogramm — noch ein gesonderter Schalter (67, 68) angeordnet ist.

**Revendications**

1. Dispositif de commande pour une boîte de vitesses automatique (1) d'un véhicule automobile, comportant un clignotant (6) et une unité électronique de commande (2) agencée pour déterminer les points de changement de rapport au moins à partir de la vitesse du véhicule (capteur 3) et d'informations relatives à la charge (capteur d'accélérateur 4), et dans lequel des ordres délivrés par des organes de commande (5) nécessaires pour la conduite du véhicule sont superposés à la détermination ordinaire des points de changement de rapport, caractérisé en ce que le clignotant (6) pour indiquer des changements de direction est raccordé à l'unité de commande (2) par une ligne supplémentaire (61) et en ce qu'un signal délivré par le clignotant est superposé à la détermination ordinaire des points de changement de rapport.

2. Dispositif de commande selon la revendication 1, caractérisé en ce que les vitesses de rotation correspondant aux points de changement de rapport vers le bas et/ou vers le haut sont augmentées par le signal délivré par le clignotant, en fonction de la vitesse du véhicule (capteur 3) et de la demande de charge (capteur d'accélérateur 4).

3. Dispositif de commande selon la revendication 2 et pourvu d'un sélecteur de programme, caractérisé en ce qu'un programme orienté vers la puissance est superposé à un programme orienté vers l'économie et le confort pour la durée du signal délivré par le clignotant ou pour cette durée prolongée d'un temps prédéfini ou d'une période de demande de puissance.

4. Dispositif de commande selon la revendication 2, caractérisé en ce que lesdites vitesses de rotation augmentées sont proches de la vitesse maximale admissible de rotation du moteur (7), indépendamment du programe sélectionné.

5. Dispositif de commande selon la revendication 1, caractérisé en ce que, sur les rapports les plus élevés, un actionnement du clignotant (6) a pour effet un changement d'au moins un rapport vers le bas.

6. Dispositif de commande selon la revendication 1, caractérisé en ce qu'un actionnement du clignotant (6) a pour effet d'empêcher un changement de rapport vers le haut qui est prévu en soi et qui résulte d'un non-actionnement ou d'un actionnement minimal de la pédale d'accélérateur (8).

7. Dispositif de commande selon la revendication 1, caractérisé en ce que l'unité électronique de commande (2) comporte un élément temporisateur (23) et en ce que la superposition du signal du clignotant à la détermination ordinaire des points de changement de rapport n'a lieu qu'après une durée définie de transmission du signal du clignotant sur la ligne (61) allant à l'unité électronique de commande (2).

8. Dispositif de commande selon la revendication 1, dans lequel le clignotant (6) comporte deux positions successives d'enclenchement dans les deux directions de marche et de virage, par exemple par pression et sur un cran, caractérisé en ce que la détermination ordinaire des points de changement de rapport dans l'unité électronique (2) n'est soumise à ladite superposition que lorsque le clignotant est enclenché sur un cran et n'est pas influencée quand le clignotant fonctionne par pression.

9. Dispositif de commande selon le préambule de la revendication 8, caractérisé en ce que le clignotant (6) comporte, pour enclencher son influence sur les points de changement de rapport, un commutateur particulier (65) qui est actionné par le fonctionnement du levier de clignotant (64).

10. Dispositif de commande selon le préambule de la revendication 8, caractérisé en ce que le clignotant (6) comporte, pour enclencher son influence sur les points de changement de rapport, un commutateur particulier (66, 67, 68) qui peut être actionné par le fonctionnement du levier de clignotant (64).

11. Dispositif de commande selon le préambule de la revendication 3, caractérisé en ce que le levier de clignotant (64) est pourvu d'un commutateur particulier (67, 68) pour l'enclenchement et/ou la commutation des — programmes programme d'économie et de confort, programme de puissance —.

**Claims**

1. A control device for an automatically shifted transmission (1) of a motor vehicle, having a flasher unit (6) and an electronic control unit (2) for ascertaining the points for gear change at least from the velocity of the vehicle (sensor 3) and the load information (accelerator pedal sensor 4), wherein commands triggered by way of adjusting devices (5) required for operation of the vehicle are further superimposed on the general determination of the gear-change point in forward travel, characterised in that the flasher unit for indication of the direction of travel is connected to the electronic unit (2) by way of a further lead (61) and the general determination of the gear-change point is superimposed by way of a signal from the flasher unit.

2. A control device as claimed in claim 1, characterised in that the rotational speeds of the change-down and/or change-up points associated with the gears are increased by way of the flasher unit signal in dependence upon the vehicle velocity (sensor 3) and the load requirement (accelerator sensor 4).

3. A control device as claimed in claim 2 and a program selector, characterised in that an economy and comfort program is superimposed by a performance program for the duration of the flasher unit signal or this duration plus a defined time or performance requirement.

4. A control device as claimed in claim 2, characterised in that these increased rotational speeds are near the admissible maximum speed for the engine (7), irrespective of the program selected at any one time.

5. A control device as claimed in claim 1, characterised in that change-down by at least one gear is effected in the ranges of the higher gears with actuation of the flasher unit (6).

6. A control device as claimed in claim 1, characterised in that a change-up operation actually intended and derived from the non-actuated, or only minimally actuated, accelerator pedal (8) is prevented with actuation of the flasher unit (6).

7. A control device as claimed in claim 1, characterised in that a timing element (23) is disposed in the electronic control unit (2), and that the general determination of the gear-change point is superimposed by way of the lead (61) to the electronic control unit (2) only from a stipulated duration of the signal of the flasher unit.

8. A control device as claimed in claim 1, the flasher unit (6) having in both directions of travel and turning two switching positions located one behind the other, for example touching or resting, characterised in that the general determination of the gear-change point in the electronic unit (2) is superimposed only when the flasher unit is at rest, and no control is effected when flashing by touching.

9. A control device in accordance with the preamble of claim 8, characterised in that the flasher unit (6) has a separate switch (65) for activating the influencing of the gear-change point, which switch is actuated jointly with the actuation of the flasher unit lever (64).

10. A control unit in accordance with the preamble of claim 8, characterised in that the flasher unit (6) has a separate switch (66, 67, 68) for activating the influencing of the gear-change point, which switch may be actuated jointly with the actuation of the flasher unit lever (64).

11. A control unit in accordance with the preamble of claim 3, characterised in that a separate switch (67, 68) is disposed on the flasher unit lever (64) for switching or switching over the program — economy and comfort program, performance program.

FIG. 2